# EUROPEAN PATENT SPECIFICATION

(11) **EP 0 295 946 B1**
(45) Date of publication and mention of the grant of the patent: **24.03.1993**
(21) Application number: 88305561.8
(22) Date of filing: 17.06.1988
(51) Int. Cl.: B23B 51/02

(54) **Drill bit with cutting insert**
Bohrer mit Schneideinsatz
Foret à élément tranchant

(30) Priority: 18.06.1987 GB 8714340
(43) Date of publication of application: 21.12.1988
(73) Proprietor: MANXTAL CUTTING TOOLS LIMITED, Douglas Isle of Man (GB)
(72) Inventor: Notter, theo Axel, Camberley Surrey GU15 3TB (GB); James, David William, Douglas Isle of Man (GB)
(74) Representative: Senior, Alan Murray

(56) References cited:
- EP-A- 0 090 657
- EP-A- 0 168 953
- DD-A- 17 839
- DE-C- 602 663
- FR-A- 2 258 932
- GB-A- 2 010 142
- GB-A- 2 022 476

## Description

This invention relates to a method of manufacturing a twist drill according to the preamble of claim 1 and to a twist drill according to the preamble of claim 9.

The life of a twist drill can be extended if it is provided with cutting inserts of very hard or abrasive material. It is known, for example from DE-C-602 663, to provide a seat in the cutting end of the drill, into which a cutting insert is located and bonded by brazing.

Because cutting inserts of this kind are very hard, it is usually very difficult to reshape the flute geometry of the twist drill after the insert has been brazed into place. It would be desirable to minimise the amount of machining required to obtain the insert with the desired cutting edge and flute geometry after the insert has been fixed to the twist drill.

The prior art portions of claims 1 and 9 are based upon the above-mentioned DE-C-602 663. As compared therewith, the present invention as defined in claims 1 and 9 utilises two inserts each of which comprises a layer of abrasive compact bonded to a cemented carbide backing with that insert itself having been formed with a prismatic shape in such a way that it can readily be fitted to a twist drill, the two inserts being mounted in respective slots in the twist drill with a portion of each insert forming adjacent parts of the chisel edge of the drill.

The cutting insert is obtained by cutting an elongate strip from a larger composite abrasive compact body, and cutting the strip into a plurality of cutting inserts.

The composite abrasive compact body may comprise a layer of abrasive compact bonded to a cemented carbide backing layer, the body having at least one flat surface and the strip being cut along parallel planes which are inclined at a predetermined angle to an imaginary plane normal to the flat surface.

In one embodiment, the cutting inserts cut from the strip have a seating surface which is rectangular.

In another embodiment, the cutting inserts cut from the strip have a seating surface which is triangular.

While an abrasive body comprising a composite abrasive compact bonded to a cemented carbide backing is defined in EP-A-0 090 657, this neither provides the advantageous prismatic shape of the insert which enables it to be used in a twist drill in the manner of the present invention nor the economical and reliable method by which the inserts can be reliably cut with the correct shape by standardised cutting of a strip of the composite.

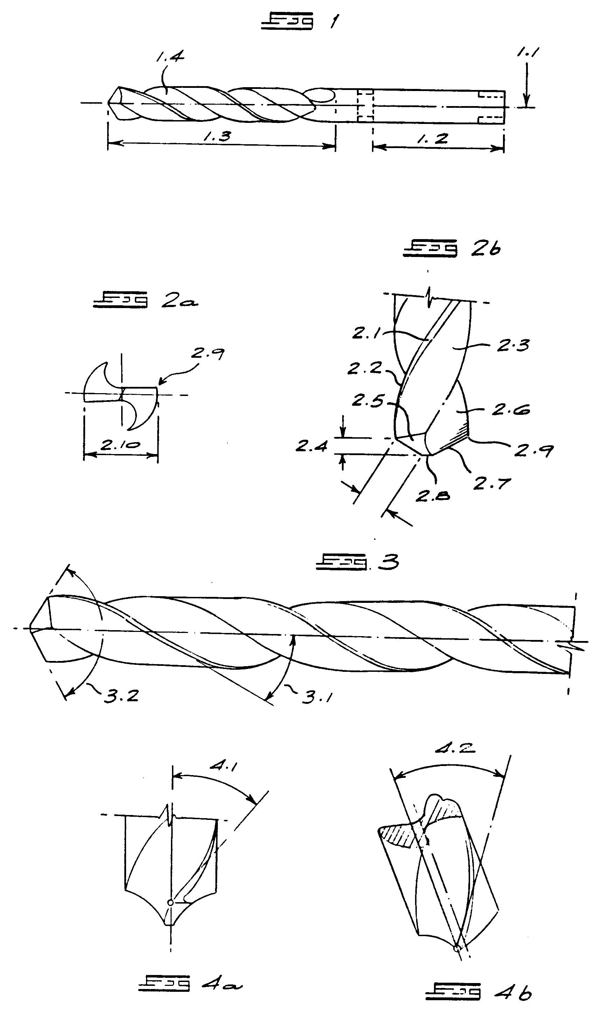

In this specification, a number of terms are used which have a relatively narrow meaning in relation to twist drills. These terms are defined below, with reference to Figure 1 to 4 of the accompanying drawings.

### In Figure 1:

- Axis:: The longitudinal centre-line of the drill.
- Shank:: That portion of the drill by which it is held and driven.
- Body:: That portion of the drill extending from the shank to the chisel edge 2.8.
- Flute:: A groove in the body of the drill which, at the intersection with the flank 2.5 provides a major cutting edge 2.7, thus permitting removal of chips and allowing cutting fluid to reach the major cutting edge.

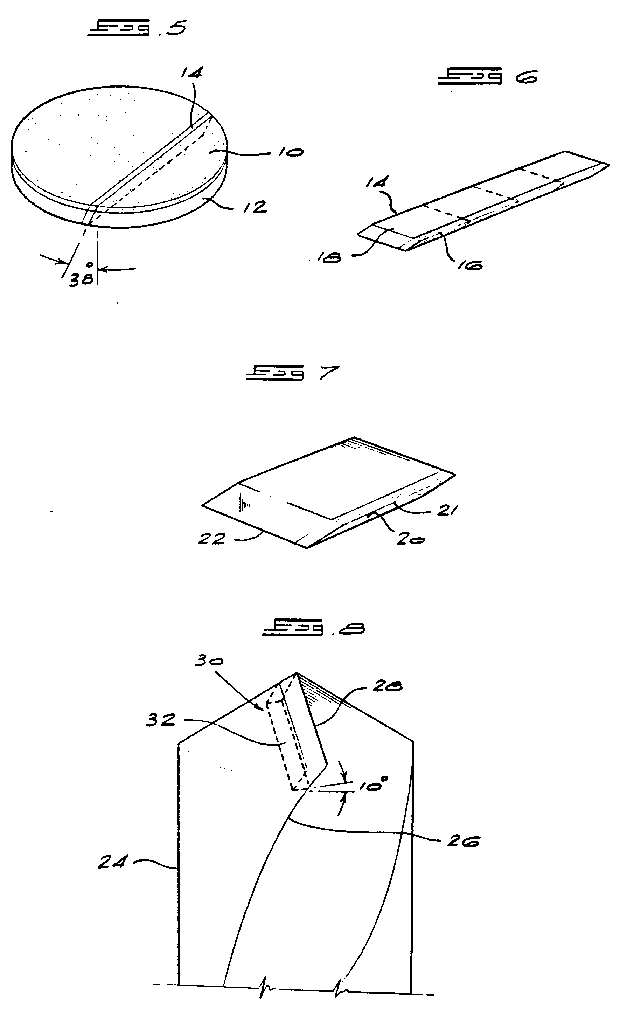

### In Figure 2:

- Land:: The cylindrical or conical leading surface of the drill.
- Leading edge of a land (minor cutting edge):: The edge formed by the intersection of a land 2.1 and a flute 1.4.
- Body clearance:: The portion of a fluted land reduced in diameter to provide diametral clearance.
- Point (cutting part):: The functional part of the drill composed of chip producing elements. The major cutting edges (lips) 2.7, chisel edge 2.8, faces 2.6 and flanks 2.5 are therefore elements of the point or cutting part.
- Flank (major flank):: The surface on the drill point bounded by the major cutting edge 2.7, the fluted land 2.1, the following flute and the chisel edge 2.8.
- Face:: The portion of the surface of a flute adjacent to the major cutting edge 2.7 and on which the chip impinges as it is cut from the workpiece.
- Major cutting edge (lip):: The edge formed by the intersection of a flank 2.5 and face 2.6.
- Chisel edge:: The edge formed by the intersection of the flanks 2.5.
- Outer corner:: The corner formed by the intersection of a major cutting edge 2.7 and the leading edge of the land 2.1.
- Drill Diameter:: The measurement across the lands 2.1 at the outer corners 2.9 of the drill measured immediately adjacent to the point 2.4.

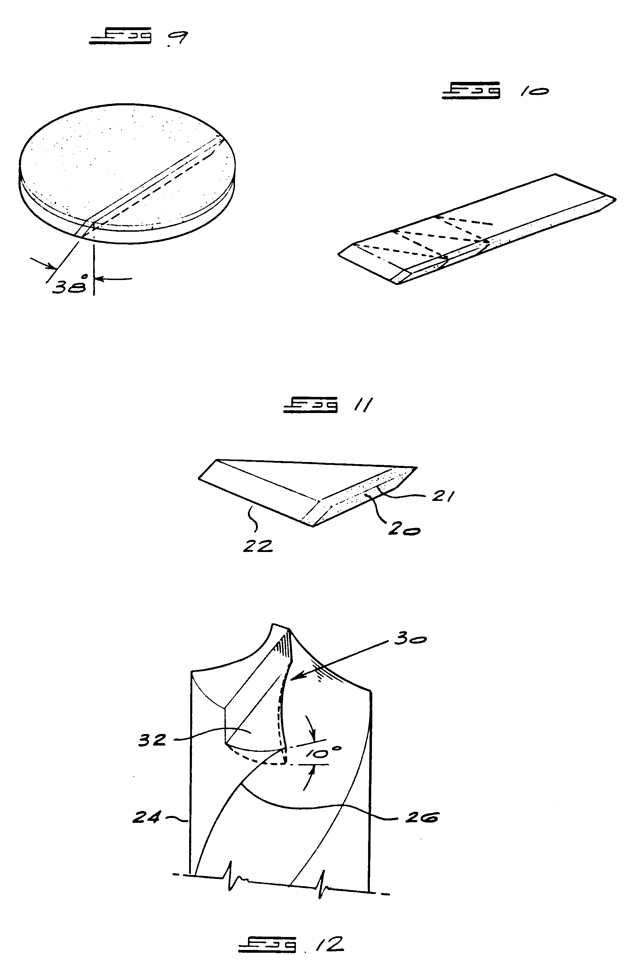

### In Figure 3:

- Helix angle:: The acute angle between the tangent to the helical leading edge and a plane containing the axis and the point in question. This angle lies in a plane normal to the radius at the point on the edge.
- Point angle:: Twice the angle formed by the drill axis and the projection of a major cutting edge in a plane through the drill axis and parallel to this cutting edge.

### In Figure 4:

- Side rake:: The angle between a face 2.6 and a plane passing through the selected point on the cutting edge and the drill axis, measured in the plane perpendicular to the radius at the selected point. (When the selected point is the outer corner, this angle is equivalent to the helix angle.)
- Normal rake:: The angle between a face 2.6 and a plane passing through the selected point on the cutting edge and the drill axis, measured in the plane perpendicular to the cutting edge.

### BRIEF DESCRIPTION OF THE DRAWINGS

Figures 1 to 4 illustrate a conventional twist drill;
Figures 5 to 8 illustrate a first embodiment of the invention in which a polycrystalline diamond cutting insert is provided in a seat at the point of a twist drill; and
Figures 9 to 12 illustrate a second embodiment of the invention.

### DESCRIPTION OF EMBODIMENTS

Figure 5 shows a composite diamond abrasive compact, such as SYNDITE PCD, which is disc shaped and which comprises a PCD layer 10 and an integral tungsten carbide support layer 12. The layer 10 is approximately 0,5 -0,7mm thick, while the layer 12 is several millimetres thick. The compact has flat faces which lie in parallel planes. An elongate strip 14 is cut from the disc along parallel planes which are inclined at an angle of 38° to an imaginary plane normal to the upper surface of the disc. The resulting strip 14 has a PCD layer 16 which has a flat, elongate upper surface, and an integral tungsten carbide backing layer 18 which is considerably thicker than the PCD layer 16.

The strip 14 is cut along the dotted lines in Figure 6 to produce a number of prismatic cutting inserts, one of which is illustrated in Figure 7. The insert has a first facet defining a cutting surface 20 of PCD material, and a second facet defining a rectangular seating surface 22 predominantly of tungsten carbide. The first and second facets are inclined, in this case, at 128° to one another (ie. 90° + 38°). One edge 21 of the cutting surface 20 will eventually define the major cutting edge of the finished drill.

Referring now to Figure 8, a standard twist drill 24 has a pair of faces 26 and a pair of major cutting edges (lips) 28 which are symmetrical with respect to the drill axis. Adjacent and parallel to each major cutting edge 28, a radially extending slot 30 of uniform width is cut to define a generally rectangular support surface 32. One side of the slot 30 coincides with the major cutting edge of the drill. The support surface 32 is inclined at 10° to the perpendicular of a plane formed by the major cutting edge and the face.

The angle at which the strip 14 is cut is determined in such a way that when the cutting inserts are brazed into seats provided in the twist drill point, the two inserts on each of the flanks meet up at the drill axis to form the chisel edge of the drill.

The slot 30 and the cutting insert shown in Figure 7 have complementary shapes, so that when the cutting insert is fitted into the slot and brazed into place, its cutting surface 20 is flush with the face of the drill, and the cutting edge 21 forms the major cutting edge of the finished drill. In the illustrated example, the helix angle of the drill is 28° and the associated side rake and normal rake angles (which vary from point to point along the cutting edge) are of similar magnitude. By inclining the support surface 32 relative to the face of the drill and providing a cutting insert which has a cutting surface 20 which is inclined relative to its seating surface 22 as described, the cutting surface of the completed drill is aligned with the face and is tangential therewith, and the face geometry is maintained.

The embodiment illustrated in Figures 9 to 12 is similar to that described above, with the major difference that the cutting insert illustrated in Figure 11 is cut triangularly. The slot 30 adjacent the major cutting edge of the twist drill 24 (see Figure 12) defines a complementary triangular seating surface which, again, is inclined at 10° relative to a plane which is normal to a plane formed by the major cutting edge and the face.

In both the described embodiments, the forces applied to the cutting inserts in use are compressive forces with respect to the cutting surfaces 20, and shear forces with respect to the seating surfaces 22. This is advantageous since the polycrystalline diamond (PCD) layer of the cutting insert is most resistant to compressive stresses, while the brazed interface between the seating surface 22 and the support surface is more resistant to shear stresses than tensile stresses. The embodiment illustrated in Figures 9 to 12 has the additional advantage that the area of the bond between the seating surface 22 and the support surface 32 is relatively large.

Further advantages of the described embodiments include the fact that a very small amount of material is used to form the cutting inserts and that very little subsequent grinding or electric discharge machining is required after the inserts have been brazed into place.

## Claims

1. A method of manufacturing a twist drill (24) in which cutting inserts are bonded into slots (30) cut in the flanks of a twist drill, the insert having a first facet (20) flush with said flank and a second adjacent facet (22) bonded to a support surface (32) on one side of said slot (30) to provide a cutting edge (28) intersecting the face (26) of the drill with the first and second facets being at a predetermined first angle with each other, characterised in that the slots (30) are so cut in each flank of the twist drill (24) as to meet in the region of the chisel edge of the drill, cutting inserts being provided in each slot so that the chisel edge of the finished twist drill is formed by adjacent portions of the respective inserts, in that each cutting insert has a prismatic shape and is comprised by a layer of abrasive compact which is bonded to a cemented carbide backing, the cutting edge on the first facet being formed by the abrasive compact layer and the seating surface on the second facet to be bonded to the support surface being formed predominantly by the cemented carbide backing, and in that the cutting insert is obtained by cutting an elongate strip (14) from a larger composite abrasive body (10,12), and cutting the strip into a plurality of cutting inserts.

2. A method according to claim 1, characterised in that the composite abrasive compact body (10,12) comprises a layer (10) of abrasive compact bonded to a cemented carbide backing layer (12), the body having at least one flat surface and the strip being cut along parallel planes which are inclined at a predetermined angle to an imaginary plane normal to the flat surface.

3. A method according to claim 1 or 2, characterised in that the cutting inserts cut from the strip (14) have a seating surface (22) which is rectangular.

4. A method according to claim 1 or 2, characterised in that the cutting inserts cut from the strip (14) have a seating surface (22) which is triangular.

5. A method according to claim 3, characterised in that the slot providing the seat (30) in the flank of the twist drill (24) is so cut as to be of uniform width adjacent and parallel to the major cutting edge of the drill, the slot defining a generally rectangular support surface (32) for the insert, and one side of the slot coinciding with the major cutting edge of the drill, so that the major cutting edge of the finished twist drill is defined by the cutting edge of the insert.

6. A method according to claim 4, characterised in that the slot providing the seat (30) in the flank of the twist drill (24) is so cut as to have a width which increases radially outwardly from the axis of the drill, the slot defining a generally triangular support surface (32) for the insert, and one side of the slot coinciding with the major cutting edge of the drill so that the major cutting edge of the finished twist drill is defined by the cutting edge of the insert.

7. A method according to any preceding claim, wherein the first predetermined angle is 128° and the support surface is at an angle of 10° relative to a plane which is normal to a plane formed by the major cutting edge and the face.

8. A method according to any one of claims 1 to 7, characterised in that the cutting insert or inserts are shaped finally after insertion in their seats (30) by grinding or electric discharge machining.

9. A twist drill (24) comprising cutting inserts bonded into seats (30) formed in the flanks of the drill, each cutting insert comprising first and second adjacent facets which intersect at a predetermined first angle, the first facet providing a cutting edge at its intersection with the face of the drill, the first facet being flush with the flank of the twist drill and the second facet comprising a seating surface bonded to a support surface (32) defined by said seat (30) characterised in that the cutting insert has a prismatic shape which has been cut from an elongated strip (14) cut from a larger composite abrasive body (10,12), in that the cutting insert comprises a layer (16) of abrasive compact which is bonded to a cemented carbide backing (16), the first facet (20) having thereon the cutting edge formed of the abrasive compact layer and the second facet seating surface being formed predominantly of the cemented carbide backing, and in that the slots provided in each flank of the twist drill (24) meet in the region of the chisel edge of the drill, the inserts in the respective slots having adjacent portions which form the chisel edge of the drill.

10. A twist drill according to claim 10, wherein the predetermined first angle is 128° and the support surface is at an angle of 10° relative to a plane which is normal to a plane formed by the major cutting edge and the face.

11. A twist drill according to claim 9 or 10, wherein first and second facets (20,22) of the prism are inclined to each other at an angle of 128°.

12. A twist drill according to claim 9, 10 or 11, wherein the end faces of the prismatic insert are rectangular.

13. A twist drill according to claim 9, 10 or 11, wherein the end faces of the prismatic insert are triangular.

## Patentansprüche

1. Verfahren zum Herstellen eines Spiralbohrers (24), bei dem Schneideinsätze in in die Flanken eines Spiralbohrers geschnittenen Schlitzen (30) verbondet werden, wobei der Einsatz eine mit der Flanke bündige erste Facette (20) und eine benachbarte zweite Facette (22) aufweist, die an einer Seite des Schlitzes (30) mit einer Trägerfläche (32) verbondet ist, um eine die Stirn (26) des Bohrers kreuzende Schneidkante (28) zu schaffen, wobei die erste und die zweite Facette unter einem vorbestimmten ersten Winkel zueinander verlaufen,
**dadurch gekennzeichnet,** daß die Schlitze (30) derart in jede Flanke des Spiralbohrers (24) geschnitten werden, daß sie sich im Bereich der Meißelkante des Bohrers treffen, daß in jedem Schlitz Schneideinsätze derart vorgesehen werden, daß die Meißelkante des fertigen Spiralbohrers durch benachbarte Teile der jeweiligen Einsätze gebildet wird, daß jeder Schneideinsatz prismatische Gestalt hat und eine Schicht aus Abrasivkompakt aufweist, die mit einem Halter aus zementiertem Karbid verbondet ist, daß die Schneidkante an der ersten Facette durch die Abrasivkompaktschicht gebildet wird und die mit der Trägerfläche zu verbondende Sitzfläche an der zweiten Facette überwiegend durch den Halter aus zementiertem Karbid gebildet wird, und daß der Schneideinsatz hergestellt wird durch Schneiden eines länglichen Streifens (14) aus einem größeren Verbundstoff-Abrasivkörper (10,12) und Schneiden des Streifens in mehrere Schneideinsätze.

2. Verfahren nach Anspruch 1, dadurch gekennzeichnet, daß der Verbundstoff-Abrasivkompaktkörper (10,12) eine Schicht (10) aus Abrasivkompakt aufweist, die mit einer zementierten Trägerschicht (12) aus Wolframkarbid verbondet ist, daß der Körper mindestens eine ebene Fläche aufweist und der Streifen entlang parallelen Ebenen geschnitten wird, die unter einem vorbestimmten Winkel zu einer senkrecht zu der ebenen Fläche verlaufenden imaginären Ebene geneigt sind.

3. Verfahren nach Anspruch 1 oder 2, dadurch gekennzeichnet, daß die aus dem Streifen (14) geschnittenen Schneideinsätze eine rechteckige Sitzfläche (22) aufweisen.

4. Verfahren nach Anspruch 1 oder 2, dadurch gekennzeichnet, daß die aus dem Streifen (14) geschnittenen Schneideinsätze eine dreieckige Sitzfläche (22) aufweisen.

5. Verfahren nach Anspruch 3, dadurch gekennzeichnet, daß der den Sitz (30) in der Flanke des Spiralbohrers (24) bildende Schlitz derart ausgeschnitten wird, daß er in der Nähe der Hauptschneidkante des Bohrers sowie parallel zu dieser gleichförmige Breite hat, daß der Schlitz eine im wesentlichen rechteckige Trägerfläche (32) für den Einsatz definiert und daß eine Seite des Schlitzes mit der Hauptschneidkante des Bohrers derart übereinstimmt, daß die Hauptschneidkante des fertigen Spiralbohrers durch die Schneidkante des Einsatzes gebildet wird.

6. Verfahren nach Anspruch 4, dadurch gekennzeichnet, daß der den Sitz (30) in der Flanke des Spiralbohrers (24) bildende Schlitz derart ausgeschnitten wird, daß seine Breite radial auswärts von der Achse des Bohrers zunimmt, daß der Schlitz eine im wesentlichen dreieckige Trägerfläche (32) für den Einsatz definiert und daß eine Seite des Schlitzes sich mit der Hauptschneidkante des Bohrers derart deckt, daß die Hauptschneidkante des fertigen Spiralbohrers durch die Schneidkante des Einsatzes gebildet wird.

7. Verfahren nach einem der vorhergehenden Ansprüche, bei dem der erste vorbestimmte Winkel 128° beträgt und die Trägerfläche unter einem Winkel von 10° relativ zu einer Ebene angeordnet ist, die senkrecht zu einer durch die Hauptschneidkante und die Stirn verlaufenden Ebene verläuft.

8. Verfahren nach einem der Ansprüche 1 bis 7, dadurch gekennzeichnet, daß der Schneideinsatz oder die -einsätze nach der Einfügung in ihre Sitze (30) mittels Schleifen oder elektrischer Entladungsbearbeitung ihre endgültige Gestalt erhalten.

9. Spiralbohrer (24) mit Schneideinsätzen, die in in den Flanken eines Spiralbohrers ausgebildeten Sitzen (30) verbondet sind, wobei jeder Schneideinsatz benachbarte erste und zweite Facetten aufweist, die sich unter einem vorbestimmten ersten Winkel kreuzen, die erste Facette an ihrer Schnittkreuzung mit der Stirn des Bohrers eine Schneidkante aufweist, die erste Facette mit der Flanke des Spiralbohrers bündig ist und die zweite Facette eine Sitzfläche aufweist, die mit einer durch den Sitz (30) definierten Trägerfläche (32) verbondet ist, dadurch gekennzeichnet, daß der Schneideinsatz eine prismatische Gestalt aufweist, die aus einem aus einem größeren Verbundstoff-Abrasivkörper (10,12) geschnittenen länglichen Streifen (14) geschnitten worden ist, daß der Schneideinsatz eine Schicht (16) aus Abrasivkompakt aufweist, die mit einem Halter (16) aus zementiertem Karbid verbondet ist, daß die erste Facette (20) die aus der Abrasivkompaktschicht gebildete Schneidkante trägt und daß die Sitzfläche der zweiten Facette überwiegend aus dem Halter aus zementiertem Karbid gebildet ist, und daß die in jeder Flanke des Spiralbohrers (24) ausgebildeten Schlitze sich im Bereich der Meißelkante des Bohrers treffen und die Einsätze in den jeweiligen Schlitzen benachbarte Teile aufweisen, die die Schneidkante des Bohrers bilden.

10. Spiralbohrer nach Anspruch 10, bei dem der vorbestimmte erste Winkel 128° beträgt und die Trägerfläche unter einem Winkel von 10° relativ zu einer Ebene angeordnet ist, die senkrecht zu einer durch die Hauptschneidkante und die Stirn verlaufenden Ebene verläuft.

11. Spiralbohrer nach Anspruch 9 oder 10, bei dem die erste und die zweite Facette (20,22) des Prismas unter einem Winkel von 128° zueinander geneigt sind.

12. Spiralbohrer nach einem der Ansprüche 9, 10 oder 11, bei dem die Endflächen des prismatischen Einsatzes rechteckig sind.

13. Spiralbohrer nach einem der Ansprüche 9, 10 oder 11, bei dem die Endflächen des prismatischen Einsatzes dreieckig sind.

## Revendications

1. Procédé pour fabriquer un foret hélicoïdal (24) dans lequel les inserts de coupe sont fixés dans des fentes (30) découpées dans les surfaces de dépouille d'un foret hélicoïdal, l'insert comprenant une première facette (20) au niveau de ladite surface de dépouille et une seconde facette adjacente (22) reliée à une surface de support (32) sur un côté de ladite fente (30) pour déterminer l'arête de coupe (28) intersectant la face (26) du foret, les première et seconde facettes formant un premier angle prédéterminé l'une avec l'autre, caractérisé en ce que les fentes (30) sont découpées dans chaque surface de dépouille du foret hélicoïdal (24) de manière à se rencontrer dans la région de l'arête transversale du foret, les inserts de coupe étant prévus dans chaque fente de manière que l'arête transversale du foret hélicoïdal terminé soit formée par les portions adjacentes des inserts respectifs, en ce que chaque insert de coupe a une forme prismatique et est constitué par une couche d'abrasif compact qui est fixé à un support en carbure cémenté, l'arête de coupe de la première facette étant formée par la couche d'abrasif compact et la surface d'assise de la seconde facette devant être fixée à la surface de support étant formée de façon prédominante par le support en carbure cémenté, et en ce que l'insert de coupe est obtenu en découpant une bande allongée (14) à partir d'un corps abrasif composite allongé (10, 12), et la découpe de la bande en plusieurs inserts de coupe.

2. Procédé selon la revendication 1, caractérisé en ce que le corps compact abrasif composite (10, 12) comprend une couche (10) d'un abrasif compact fixé à une couche de support en carbure cémenté (12), le corps comprenant au moins une surface plane et la bande étant découpée le long de plans parallèles qui sont inclinés selon un angle prédéterminé par rapport à un plan imaginaire perpendiculaire à la surface plane.

3. Procédé selon la revendication 1 ou 2, caractérisé en ce que les inserts de coupe découpés dans la bande (14) ont une surface d'assise (22) qui est rectangulaire.

4. Procédé selon la revendication 1 ou 2, caractérisé en ce que les inserts de coupe découpés dans la bande (14) ont une surface d'assise (22) qui est triangulaire.

5. Procédé selon la revendication 3, caractérisé en ce que la fente qui détermine le siège (30) dans la surface de dépouille du foret hélicoïdal (22) est découpée de manière à être de largeur uniforme dans une région adjacente et parallèle à l'arête de coupe principale du foret, la fente définissant une surface de support généralement rectangulaire (32) pour l'insert, et un côté de la fente coïncidant avec l'arête de coupe principale du foret de manière que l'arête de coupe principale du foret hélicoïdal terminé soit définie par l'arête de coupe de l'insert.

6. Procédé selon la revendication 4, caractérisé en ce que la fente qui constitue le siège (30) dans la surface de dépouille du foret hélicoïdal (24) est découpée de manière à présenter une largeur qui augmente radialement vers l'extérieur à partir de l'axe du foret, la fente définissant une surface de support généralement triangulaire (32) pour l'insert, et un côté de la fente coïncidant avec l'arête de coupe principale du foret de manière que l'arête de coupe principale du foret hélicoïdal terminé soit définie par l'arête de coupe de l'insert.

7. Procédé selon l'une quelconque des revendications précédentes, dans lequel le premier angle prédéterminé est de 128° et la surface de support forme un angle de 10° avec un plan qui est perpendiculaire à un plan formé par l'arête de coupe principale et la face.

8. Procédé selon l'une quelconque des revendications 1 à 7, caractérisé en ce que l'insert ou les inserts de coupe sont conformés finalement après insertion dans leurs sièges (30) par meulage ou par usinage par décharges électriques.

9. Foret hélicoïdal (24) comprenant des inserts de coupe fixés dans des sièges (30) formés dans les surfaces en dépouille du foret, chaque insert de coupe comprenant des première et seconde facettes adjacentes qui se coupent sous un premier angle prédéterminé, la première facette déterminant une arête de coupe à son intersection avec la face du foret, la première facette étant au niveau de la surface de dépouille du foret hélicoïdal et la seconde facette comprenant une surface d'assise fixée à une surface de support (32) définie par ledit siège (30), caractérisé en ce que l'insert de coupe est de forme prismatique et a été découpé dans une bande allongée (14) découpée dans un corps abrasif compact (10, 12) plus important, en ce que l'insert de coupe comprend une couche (16) en un abrasif compact qui est fixé à un corps en carbure cémenté (16), la première facette (20) sur laquelle est formée l'arête de coupe étant formée par la couche en élément compact abrasif et la surface d'assise de la seconde facette étant formée de façon prédominante par le support en carbure cémenté, et en ce que les fentes prévues dans chaque surface de dépouille du foret hélicoïdal (24) se rencontrent dans la région de l'arête transversale du foret, les inserts dans les fentes respectives comprenant des portions adjacentes qui forment l'arête transversale du foret.

10. Foret selon la revendication 9, dans lequel le premier angle prédéterminé est de 128° et la surface de support forme un angle de 10° avec un plan qui est perpendiculaire à un plan formé par l'arête de coupe principale et la face.

11. Foret selon la revendication 9 ou 10, dans lequel les première et seconde facettes (20, 22) du prisme sont inclinées l'une par rapport à l'autre en formant un angle de 128°.

12. Foret selon l'une quelconque des revendications 9 à 11, dans lequel les faces d'extrémité de l'insert prismatique sont rectangulaires.

13. Foret selon l'une quelconque des revendications 9 à 11, dans lequel les faces d'extrémité de l'insert prismatique sont triangulaires.
